# EUROPEAN PATENT SPECIFICATION

(11) **EP 3 620 431 B1**
(45) Date of publication and mention of the grant of the patent: **19.08.2020**
(21) Application number: 18192935.7
(22) Date of filing: 06.09.2018
(51) Int. Cl.: C01B 3/38

(54) **DUAL H2 AND CO PRODUCTION WITH CO TURNDOWN**
DUAL H2 UND CO-PRODUKTION MIT CO TURNDOWN
DOUBLE PRODUCTION D'H2 ET DE CO AVEC ARRET DE CO

(43) Date of publication of application: 11.03.2020
(73) Proprietor: AIR PRODUCTS AND CHEMICALS, INC., Allentown, Pennsylvania 18195 (US)
(72) Inventor: GENKIN, Eugene S., Allentown, PA 18104 (US); FORESTER, Kelly Ann, Harleysville, PA 19438 (US)
(74) Representative: SSM Sandmair

(56) References cited:
- EP-A1- 0 816 290
- EP-A1- 1 146 009
- EP-A2- 2 565 154
- US-A- 5 351 491
- US-A1- 2007 269 690

## Description

### BACKGROUND

The present disclosure relates to a process and apparatus for the production of a H₂-containing product and a CO-containing product with a CO-containing product turndown capability.

H₂ and CO can be produced from a common crude synthesis gas production unit using a first process train for producing the H₂ and a second process train for producing CO. The H₂ can be produced by passing a first portion of the crude synthesis gas to a shift reactor and passing the shifted and dewatered synthesis gas to a pressure swing adsorption unit. The CO can be produced by passing a second portion of crude synthesis gas to a CO₂ removal unit and passing the CO₂-depleted synthesis gas to a cryogenic separation unit.

Each of the process trains are designed for a specific production rate of their respective products, as it is disclosed in EP 1 146 009 A1.

EP 2 565 154 A2 discloses an apparatus and a process for producing a hydrogen-containing product stream and a carbon monoxide-containing product stream from a crude synthesis gas produced in a syngas production unit. One process train is disclosed, whereby the hydrogen-containing product stream is separated from the crude synthesis gas first. The carbon monoxide-containing product stream is separated from the residual gas stream by a cryogenic separation unit.

US 5,351,492 also discloses a process for the production of high-purity hydrogen and high-purity carbon monoxide by a one train separation process from a ... gas mixture. In particular, carbon monoxide is separated from an carbon monoxide rich gas after the crude gas has passed an CO₂ scrubber a H₂O removal unit and a pressure swing adsorption step, where a hydrogen product fraction is withdrawn.

EP 0 816 290 A1 discloses a process for simultaneously extracting carbon monoxide and hydrogen gas, by an apparatus for producing ammonia or hydrogen. The carbon monoxide gas is extracted from a second divided portion of crude gas after water, carbon dioxide and hydrogen gas have been withdrawn from the second divided portion of crude gas. A first divided portion of crude gas is passed to a CO-converter for an ammonia synthesis which is dependent from the volume flow and the gas composition of the extracted carbone monoxide gas.

When the requirement from the customer or downstream process for the CO is reduced or stopped (short or intermediate term), the flow rate of the crude synthesis gas to the second process train is reduced and the cryogenic separation unit is turned down. The problem is that the turn down for cryogenic separation units is limited, for example to 30% to 45% of their design capacity. When the requirement from the customer or downstream process for the CO is reduced below the turndown capability of the cryogenic separation unit, the unneeded CO is used as a fuel or flared.

Shutting down the CO producing train is problematic due to the long time required to start up the cryogenic separation unit and the CO₂ removal unit.

Shutting down the CO producing train may also be problematic due to effects on heat transfer equipment that is integrated between H₂-production train and the COproduction train.

Industry desires to be able to turn down CO production without having to flare the CO and/or minimizing the amount of CO used as fuel.

Industry desires to improve overall production efficiency during production turndown modes.

### BRIEF SUMMARY

The present disclosure relates to a process and apparatus for the production of a H₂-containing product and a CO-containing product with a CO-containing product turndown capability as defined in claims 1 to 14.

### BRIEF DESCRIPTION OF SEVERAL VIEWS OF THE DRAWINGS

FIG. 1 is a process flow diagram of a system for producing a H₂-containing product and a CO-containing product.
FIG. 2 is a schematic of a catalytic steam-hydrocarbon reformer.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from the scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

In this specification, unless expressly otherwise indicated, the word "or" is used in the sense of an operator that returns a true value when either or both of the stated conditions are met, as opposed to the operator "exclusive or" which requires only that one of the conditions is met.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein a "divided portion" of a stream is a portion having the same chemical composition and species concentrations as the stream from which it was taken.

As used herein a "separated portion" of a stream is a portion having a different chemical composition and different species concentrations than the stream from which it was taken.

As used herein, "first," "second," "third," etc. are used to distinguish from among a plurality of steps and/or features, and is not indicative of the total number, or relative position in time and/or space unless expressly stated as such.

The terms "depleted" or "lean" mean having a lesser mole % concentration of the indicated component than the original stream from which it was formed. "Depleted" does not mean that the stream is completely lacking the indicated component.

The terms "rich" or "enriched" mean having a greater mole % concentration of the indicated component than the original stream from which it was formed.

As used herein, "in flow communication" or "in fluid flow communication" or "in fluid communication" mean operatively connected by one or more conduits, manifolds, valves and the like, for transfer of fluid. A conduit is any pipe, tube, passageway or the like, through which a fluid may be conveyed. An intermediate device, such as a pump, compressor or vessel may be present between a first device in fluid flow communication with a second device unless explicitly stated otherwise.

"Downstream" and "upstream" refer to the intended flow direction of the process fluid transferred. If the intended flow direction of the process fluid is from the first device to the second device, the second device is in downstream fluid flow communication of the first device. In case of a recycle stream, downstream and upstream refer to the first pass of the process fluid.

As used in this application, the terms "cryogenic separation," "cryogenically separating" mean that a mixture is separated by a separation process, for example condensation, distillation and/or fractionation, operating with a minimum temperature below the temperature required to condense at least one component from the mixture at operating pressure. Usually, said minimum temperature will be below -60°F (-50°C), preferably below -150°F (-100°C).

Non-cryogenic separation includes other forms of separation, for example sorption and membrane separation.

Illustrative embodiments of the process and apparatus are described below. While the process and apparatus are susceptible to various modifications and alternative forms, specific embodiments thereof have been shown by way of example in the drawings and are herein described in detail. It should be understood, however that the description herein of specific embodiments is not intended to limit the invention to the particular forms disclosed, but on the contrary, the invention is to cover all modifications, equivalents, and alternatives falling within the scope of the invention as defined by the appended claims.

The present disclosure relates to a process and apparatus for the production of a H₂-containing product and a CO-containing product with the capability to turn down the production rate of the CO-containing product.

The process and apparatus are described with reference to the figures.

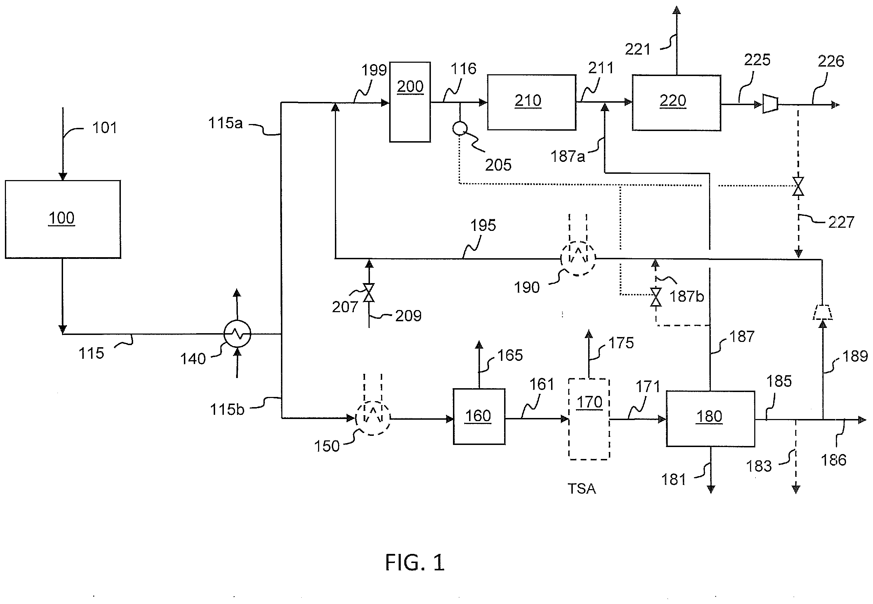

FIG. 1 is a process flow diagram for the process and apparatus of a preferred embodiment for producing a H₂-containing product 225 and a CO-containing product 185 with CO-containing product turndown capability.

A production unit 100 produces a crude synthesis gas 115. A "crude synthesis gas" is defined herein as a gas comprising H₂, CO, and other gaseous components, for example, one or more of H₂O, CH₄, N₂, and CO₂. The production unit 100 has an inlet for introducing reactants 101 and an outlet for discharging the crude synthesis gas 115.

The production unit 100 may be a catalytic steam-hydrocarbon reformer, a partial oxidation unit (gasification unit), an autothermal reformer, or other unit known in the art for producing a crude synthesis gas. As used herein, the term "partial oxidation" includes the partial oxidation of a gas, liquid, or solid carbonaceous material, with or without a catalyst.

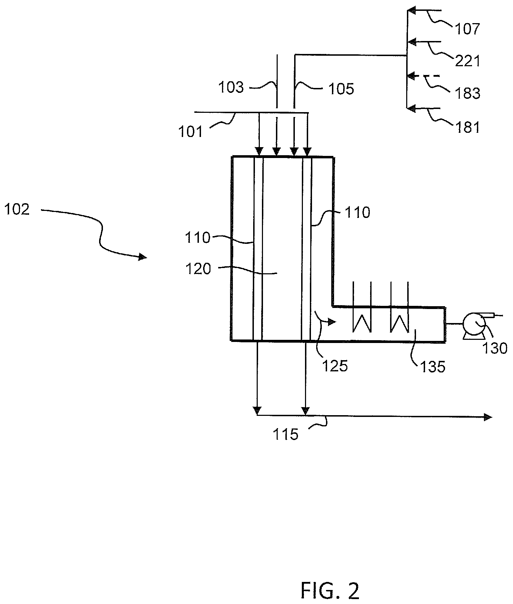

The production unit 100 may be a catalytic steam-hydrocarbon reformer 102 as shown schematically in FIG. 2.

In case the production unit 100 is a catalytic steam-hydrocarbon reformer 102, a reformer feed gas 101 is introduced into a plurality of catalyst-containing reformer tubes 110 in the catalytic steam-hydrocarbon reformer 102. The reformer feed gas 101 is reacted in a reforming reaction under reaction conditions effective to form a reformate comprising H₂, CO, CH₄, and H₂O, and the reformate is withdrawn from the plurality of catalyst-containing reformer tubes 110 of the catalytic steam-hydrocarbon reformer 102 as the crude synthesis gas 115.

In case the production unit 100 is a catalytic steam-hydrocarbon reformer 102, the catalytic steam-hydrocarbon reformer 102 has a combustion (radiant) section 120. The combustion section contains the plurality of catalyst-containing reformer tubes 110. Each of the plurality of catalyst-containing reformer tubes 110 has an inlet and an outlet, wherein the outlet of the production unit 100 is in fluid flow communication with the outlet of each of the plurality of catalyst-containing reformer tubes 110.

A fuel 105 is combusted with an oxidant 103 in the catalytic steam-hydrocarbon reformer 102 external to the plurality of catalyst-containing reformer tubes 110 under reaction conditions effective to combust the fuel 105 to form a combustion product gas 125 and generate heat to supply energy for reacting the reformer feed gas 101 inside the plurality of catalyst-containing reformer tubes 110. The combustion product gas 125 is withdrawn from the catalytic steam-hydrocarbon reformer 102.

A waste heat boiler 140 may be used to cool the crude synthesis gas 115 withdrawn from the production unit 100. Steam may be produced in the waste heat boiler 140.

There are two processing trains: a first train for producing the H₂-containing product 225, and a second train for producing the CO-containing product 185.

The crude synthesis gas 115 is divided into a first divided portion 115a and a second divided portion 115b. The first divided portion 115a is passed to the process train for producing the H₂-containing product 225 and the second divided portion 115b is concurrently passed to the process train for producing the CO-containing product 185.

The first divided portion 115a of the crude synthesis gas 115 is passed to a shift reactor 200 as at least a part of the feed 199 to the shift reactor 200. The inlet of the shift reactor 200 is in downstream fluid flow communication with the outlet of the production unit 100. The inlet of the shift reactor 200 is operatively disposed to receive the first divided portion 115a of the crude synthesis gas 115 discharged from the outlet of the production unit 100.

The feed 199 to the shift reactor 200 is subjected to catalytic shift to convert CO to CO₂ by reaction with steam, with the concurrent production of more H₂. Minor impurities in the shift reactor feed, for example, dust, carbon, tar, hydrogen cyanide, nitrogen oxides, sulfur, and sulfur compounds are desirably removed before the shift reaction. Such preliminary purification may be affected by conventional techniques, for example, by a catalytic feed purification system comprising a hydrogenator reactor and desulfurizer unit (not shown), typically located upstream of the production unit 100.

The catalytic shift can be carried out in either of two broad ways.

In a first way, if thorough removal of sulfur and any other catalyst poisons is affected prior to shift, the following techniques are suitable:
"high temperature shift", using an inlet temperature in the range 330°C. to 400°C., an outlet temperature in the range 400°C. to 500°C., usually over an iron oxide/chromia catalyst, and affording in a single stage an outlet carbon monoxide content in a range of about 2% to about 5% by volume on a dry basis;
"low temperature shift", using an inlet temperature in a range of about 190°C. to about 230°C., an outlet temperature in a range of about 250°C. to about 300°C., usually over a catalyst comprising metallic copper, zinc oxide, and one or more other difficulty reducible oxides such as alumina or chromia, and affording an outlet carbon monoxide content in a range of about 0.1% to about 1.0%, especially under 0.5% by volume on a dry basis;
"combination", using the sequence of high temperature shift, cooling by indirect heat exchange, and low temperature shift; if desired, either shift stage can be subdivided with interbed cooling; and
"medium temperature shift" in which the inlet temperature is in a range of about 190°C. to about 325°C. and the outlet temperature is up to about 430°C.: a suitably formulated supported copper catalyst can be used, and the outlet carbon monoxide content is typically up to about 2% by volume on a dry basis.

In a second way, if there is no sulfur removal before the shift reactor, or if there is a treatment, for example with an absorbent liquid, that removes some of the sulfur compounds, e.g. hydrogen sulphide, but only effects incomplete removal of other sulfur compounds, e.g. carbonyl sulphide, then sulfactive shift, otherwise known as "dirty", shift may be employed, wherein the crude synthesis gas is contacted with a cobalt-molybdenum sulphide catalyst. The temperature at the inlet is typically in the range of 200° to 350°C. and at the outlet 50° to 100°C. higher. The outlet carbon monoxide content is typically 0. 5 to 4% by volume on a dry basis.

If the sulfactive form of shift is used, the crude synthesis gas is preferably desulphurised before it is passed to the pressure swing adsorption unit 220.

The above inlet and outlet temperatures refer to adiabatic shift catalyst beds. However, in the interest of energy recovery, catalytic shift may be operated in indirect heat exchange with a coolant, especially water under pressure. Thus, the catalyst can be disposed in tubes surrounded by water, or vice versa. Details of such a shift stage are given in EP-A-157480. If the crude synthesis gas has been cooled to purify it before shift, the temperature in the shift stage preferably rises from the inlet to the outlet.

After the crude synthesis gas is shifted in the shift reactor, shift reactor effluent 116 (shifted crude synthesis gas) is withdrawn from the shift reactor 200.

Heat may be recovered from the shift reactor effluent 116 in a heat transfer network of heat exchangers 210 where steam may be produced from the heat extracted from the crude synthesis gas, as is well-known in the art. Any desired network of heat exchangers may be used, for example, as disclosed in U.S. Pat. No. 8,828,107, U.S. Pat. No. 8,956,587, U.S. Pat. No. 9,586,819, and PCT Publ. No. WO 2012/078299. The heat transfer network of heat exchangers 210 may also include the waste heat boiler 140 and heat exchangers for cooling the second divided portion 115b of the crude synthesis gas 115.

Water may be condensed and removed from the crude synthesis gas after passing through the shift reactor 200 in the heat exchanger network 210 prior to passing the crude synthesis gas to the pressure swing adsorption unit 220.

The pressure swing adsorption unit has an inlet, a first outlet and a second outlet. The inlet of the pressure swing adsorption unit 220 is in downstream fluid flow communication with the outlet of the shift reactor 200. The inlet of the pressure swing adsorption unit 220 is operatively disposed to receive at least a portion of the shift reactor effluent, typically water-depleted, from the outlet of the shift reactor 200.

The pressure swing adsorption unit feed comprising water-depleted shift reactor effluent 211, is separated in the pressure swing adsorption unit 220 to form the H₂-containing product 225 and a pressure swing adsorption unit by-product gas 221, typically called "tail gas". H₂-containing product 225 is discharged from the first outlet of the pressure swing adsorption unit 220 and the pressure swing adsorption unit by-product gas 221 is discharged from the second outlet of the pressure swing adsorption unit 220. The pressure swing adsorption unit by-product gas 221 may be passed to the production unit 100 as a feed (including feed as a process gas and/or as a fuel) to the production unit during the primary operating mode and during the secondary operating (turndown) mode.

The pressures swing adsorption unit 220 may use any suitable pressure swing adsorption cycle. Pressure swing adsorption cycles comprise a number of well-known steps. The various steps of pressure swing adsorption cycles are described in EP 2823872 and US2014/0373713 (now US 9381460). Specific pressure swing adsorption cycles are provided in companion articles "Pressure Swing Adsorption cycles for 4 to 7 adsorption beds," IP.com number 000241449, April 29, 2015, and "Pressure Swing Adsorption cycles for 7 or more adsorption beds," IP.com number 000241619, May 18, 2015, available in print form in The IP.com Journal.

In case the production unit 100 is a catalytic steam-hydrocarbon reformer 102, the pressure swing adsorption unit by-product gas 221 may be passed to the production unit 100 as a feed to the production unit as part of the fuel 105 for the reformer 102 as shown in FIG. 2.

In case the production unit 100 is a partial oxidation reactor, such as a coal gasifier, the pressure swing adsorption unit by-product gas 221 may be introduced into the partial oxidation reactor along with the carbonaceous feedstock.

In case the production unit 100 is an autothermal reformer, the pressure swing adsorption unit by-product gas 221 may be introduced into the autothermal reformer as part of the hydrocarbon feed.

The second divided portion 115b of the crude synthesis gas 115 may be cooled in one or more heat exchangers 150 and subsequently passed to CO₂ removal unit 160. The second divided portion 115b of the crude synthesis gas 115 is passed to the CO₂ removal unit concurrent with the first divided portion 115a being passed to the shift reactor 200. The one or more heat exchangers 150 may be part of the heat transfer network of heat exchangers 210. The CO₂ removal unit 160 may be any suitable unit for removing CO₂ known in the art, for example, a chemical (amine) wash (MDEA, MEA, DEA), a physical wash (Rectisol®) or selective adsorption.

Acid gas removal systems for synthesis gas applications are designed to remove primarily CO₂ and, in some cases, sulfur components. Acid gas removal systems comprise a single- or multi-stage adsorber column, solution regeneration equipment such as a stripper and/or a flash vessel, heat exchangers including a stripper reboiler, and pumps. There are two basic types of acid gas removal systems: chemical wash or physical wash. Examples of chemical wash include all amine-based systems (MEA, MDEA, DEA, DGA®, aMDEA®, UCARSOL™, Sulfinol®), and potassium carbonate Benfield process. Examples of physical wash include chilled methanol based Rectisol® system, and dimethylether or polyethylene glycol Selexol® system.

The CO₂ removal unit 160 has an inlet, a first outlet, and a second outlet. The inlet of the CO₂ removal unit 160 is in downstream fluid flow communication with the outlet of the production unit 100. The inlet of the CO₂ removal unit is operatively disposed to receive the second divided portion 115b of the crude synthesis gas 115 withdrawn from the outlet of the production unit 100.

CO₂ is separated from the second divided portion 115b of the crude synthesis gas 115 in the CO₂ removal unit to form a CO₂-depleted crude synthesis gas 161 and a CO₂-containing effluent 165. The CO₂-depleted crude synthesis gas 161 is discharged from the first outlet of the CO₂ removal unit and the CO₂-containing effluent 165 is discharged from the second outlet of the CO₂ removal unit 160.

In case the production unit 100 is a partial oxidation reactor using a solid carbonaceous feed (e.g. a coal gasifier), a portion of the CO₂-containing effluent 165 may be treated and compressed and used to transport the solid carbonaceous feed to the partial oxidation reactor.

The CO₂-depleted crude synthesis gas 161 from the CO₂-removal unit 160 may be separated in a temperature swing adsorption (TSA) unit 170. The temperature swing adsorption unit 170 may be required to remove any residual CO₂ and H₂O left in the CO₂-depleted crude synthesis gas 161 after passing through the CO₂-removal unit 160 before cryogenic separation. Temperature swing adsorption units for removing CO₂ and H₂O are well-known in the art. The TSA unit 170 has an inlet, a first outlet, and a second outlet. The inlet of the TSA unit 170 is in downstream fluid flow communication with the outlet of the CO₂ removal unit 160. A crude synthesis gas depleted of CO₂ and H₂O and suitable as a cryogenic separation unit feed 171 is withdrawn from the first outlet of the TSA unit 170. A temperature swing adsorption unit by-product gas 175 containing CO₂ and H₂O is withdrawn from the second outlet of the TSA unit 170.

A cryogenic separation unit feed 171 comprising at least a portion of the CO₂-depleted crude synthesis gas 161 is separated in a cryogenic separation unit 180 (referred to in the industry as a "cold box") to form the CO-containing product 185, a H₂-rich stream 187, and a cryogenic separation unit by-product 181. The cryogenic separation unit 180 may also form additional streams (not shown).

The cryogenic separation unit 180 has an inlet, a first outlet, a second outlet, and a third outlet. The inlet is in downstream fluid flow communication with the first outlet of the CO₂ removal unit 160 (via the first outlet of the TSA unit 170). The inlet of the cryogenic separation unit 180 is operatively disposed to receive at least a portion of the CO₂-depleted crude synthesis gas 161 from the outlet of the CO₂-removal unit 160. The CO-containing product 185 is discharged from the first outlet of the cryogenic separation unit 180, the H₂-rich stream 187 is discharged from the second outlet of the cryogenic separation unit 180, and the cryogenic separation unit by-product 181 is discharged from the third outlet of the cryogenic separation unit 180.

The CO-containing product 185 may be essentially pure CO, for example, having a CO concentration greater than 99 mole %. The CO-containing product 185 may be an "oxogas," a synthesis gas having a desired H₂ to CO molar ratio. The oxogas may, for example, have a H₂:CO molar ratio between 0.5 and 2.5.

The cryogenic separation unit 180 may contain any number of fractionators such as distillation columns, flash drums, rectification columns, stripping columns, and the like. The cryogenic separation unit 180 may contain a methane wash column.

Any suitable cryogenic separation unit 180 may be used to form the CO-containing product 185. Disclosures for cryogenic separation units for forming CO-containing products include U.S. Pat. Nos. 4,217,759, 4,488,890, 4,525,187, 4,566,886, 5,351,491, 5,609,040, 5,832,747, 6,161,397, and EP 2 414 282.

The H₂-rich stream 187 has a relatively high H₂ concentration and is suitable as a feed to the pressure swing adsorption unit 220. At least a portion 187a of the H₂-rich stream 187 is passed to the pressure swing adsorption unit as part of the pressure swing adsorption unit feed. A process gas transfer line provides fluid flow communication between the second outlet of the cryogenic separation unit 180 and the inlet of the pressure swing adsorption unit 220 for transferring at least a portion 187a of the H₂-rich stream 187 from the second outlet of the cryogenic separation unit 180 to the inlet of the pressure swing adsorption unit 220.

The cryogenic separation unit by-product 181 generally contains about 75 to 80 vol. % CH₄, about 20 vol. % H₂, and about 1.5 vol. % CO, and can be passed to the production unit 100 as a feed (including feed as a process gas and/or as a fuel) to the production unit.

In case the production unit 100 is a catalytic steam-hydrocarbon reformer 102, the cryogenic separation unit by-product 181 may be passed to the catalytic steam-hydrocarbon reformer 102 as a feed to the catalytic steam-hydrocarbon reformer 102 as part of the fuel 105 for the catalytic steam-hydrocarbon reformer 102 as shown in FIG. 2.

In case the production unit 100 is a partial oxidation reactor, such as a coal gasifier, the cryogenic separation unit by-product 181 may be introduced into the partial oxidation reactor along with the carbonaceous feedstock.

In case the production unit 100 is an autothermal reformer, the cryogenic separation unit by-product 181 may be introduced into the autothermal reformer as part of the hydrocarbon feed.

The process is characterized by a primary (normal) operating mode and a secondary (CO turndown) mode, more specifically by the secondary (CO turndown) mode.

During the primary operating mode, a portion 226 of the H₂-containing product 225 is passed to storage, a customer, and/or a downstream process and a portion 186 of the CO-containing product 185 is passed to storage, a customer, and/or a downstream process.

During the secondary operating mode, a portion 226 of the H₂-containing product 225 is passed to storage, a customer, and/or a downstream process and a portion 186 of the CO-containing product 185 is passed to storage, a customer, and/or a downstream process where the flow rate of the portion 186 during the secondary operating mode is less than the flow rate of the portion 186 during the primary operating mode. The flow rate of the portion 186 of the CO-containing product 185 during the secondary operating mode may be zero.

The CO producing train has a design capacity for the production of CO. The design capacity is the theoretical maximum output of the CO producing train in a given period under ideal or standard conditions.

During the primary (normal) operating mode, CO may be produced at a molar flow rate from 80% to 100% of the design capacity for the CO producing train. During the secondary operating mode, the CO-containing product 185 may be produced at 25% to 70% or 30% to 50% of the design capacity molar flow rate.

During the primary operating mode, crude synthesis gas 115 is produced in the production unit 100 and the crude synthesis gas 115 is withdrawn from the production unit 100. The crude synthesis gas 115 is divided into the first divided portion 115a and the second divided portion 115b. The first divided portion is passed to the shift reactor as at least a part of the feed 199 to the shift reactor 200, reacted in the shift reactor to form the shift reactor effluent 116, and the shift reactor effluent 116 is withdrawn from the shift reactor 200. The second divided portion 115b of the crude synthesis gas 115 is passed to the CO₂ removal unit 160, CO₂ is separated from the second divided portion 115b in the CO₂ removal unit 160 to form the CO₂-depleted crude synthesis gas 161 and the CO₂-containing effluent 165.

During the primary operating mode, the pressure swing adsorption unit feed comprising the shift reactor effluent 116 is separated in the pressure swing adsorption unit 220 to form the H₂-containing product 225 and the pressure swing adsorption unit by-product gas 221.

During the primary operating mode, the cryogenic separation unit feed comprising at least a portion of the CO₂-depleted crude synthesis gas 161 is separated in the cryogenic separation unit 180 to form at least the CO-containing product 185, the H₂-rich stream 187, and the cryogenic separation unit by-product 181. At least a portion 187a of the H₂-rich stream 187 is passed to the pressure swing adsorption unit 220 as part of the pressure swing adsorption unit feed.

During the secondary operating mode, crude synthesis gas 115 is produced in the production unit 100 and the crude synthesis gas 115 is withdrawn from the production unit 100. The crude synthesis gas 115 is divided into the first divided portion 115a and the second divided portion 115b. The first divided portion is passed to the shift reactor as at least a part of the feed 199 to the shift reactor 200, reacted in the shift reactor to form the shift reactor effluent 116, and the shift reactor effluent 116 is withdrawn from the shift reactor 200. The second divided portion 115b of the crude synthesis gas 115 is passed to the CO₂ removal unit 160, CO₂ is separated from the second divided portion 115b in the CO₂ removal unit 160 to form the CO₂-depleted crude synthesis gas 161 and the CO₂-containing effluent 165.

During the secondary operating mode, the pressure swing adsorption unit feed comprising the shift reactor effluent 116 is separated in the pressure swing adsorption unit 220 to form the H₂-containing product 225 and the pressure swing adsorption unit by-product gas 221.

During the secondary operating mode, the cryogenic separation unit feed comprising at least a portion of the CO₂-depleted crude synthesis gas 161 is separated in the cryogenic separation unit 180 to form at least the CO-containing product 185, the H₂-rich stream 187, and the cryogenic separation unit by-product 181. At least a portion 187a of the H₂-rich stream 187 is passed to the pressure swing adsorption unit 220 as part of the pressure swing adsorption unit feed.

What distinguishes the secondary operating mode from the primary operating mode is that during the secondary operating mode, a portion 189 or all of the CO-containing product 185 is passed to the shift reactor 200 as part of the feed 199 to the shift reactor 200. Ordinarily, none of the CO-containing product 185 is passed to the shift reactor 200 as part of the feed to the shift reactor during the primary operating mode. In case a portion 189 of the CO-containing product 185 is passed to the shift reactor 200 during the primary operating mode, the distinguishing feature is that a greater molar flow rate of the portion 189 is passed to the shift reactor 200 during the secondary operating mode than during the primary operating mode.

Depending on the pressure of the CO-containing product 185, the portion 189 may be compressed in a compressor as the portion 189 of the CO-containing product 185 is passed to the shift reactor 200.

A process gas transfer line, where the inlet of the shift reactor 200 is in fluid flow communication with the first outlet of the cryogenic separation unit 180 via the process gas transfer line, provides the capability to pass the portion 189 or all of the CO-containing product 185 to the inlet of the shift reactor 200.

Depending on the design capacity of the shift reactor 200, all of the CO-containing product 185 may not be able to be processed in the shift reactor 200. In that case, a portion 183 of the CO-containing product 185 may be passed to the production unit 100 as a feed (including feed as a process gas and/or as a fuel) to the production unit 100 during the secondary operating mode.

In case the production unit 100 is a catalytic steam-hydrocarbon reformer 102, the portion 183 of the CO-containing product 185 may be passed to the production unit 100 as a feed to the production unit 100 during the secondary operating mode as part of the fuel 105 for the reformer 102 as shown in FIG. 2.

In case the production unit 100 is a partial oxidation reactor, such as a coal gasifier, the portion 183 of the CO-containing product 185 may be introduced into the partial oxidation reactor along with the carbonaceous feedstock.

In case the production unit 100 is an autothermal reformer, the portion 183 of the CO-containing product 185 may be introduced into the autothermal reformer as part of the hydrocarbon feed.

Since the shift reaction is exothermic, a higher molar flow rate of CO, and resulting higher molar concentration, in the feed 199 to the shift reactor 200 would increase the temperature in the shift reactor 200, if no other process modifications are made.

In the process, a H₂-containing gas and/or a CO₂-containing gas may be introduced into the shift reactor 200 as part of the feed 199 to the shift reactor 200 during the secondary operating mode. By adding H₂ and/or CO₂, the temperature of the shift reactor 200 can be moderated.

The CO₂-containing gas may be formed from the CO₂-containing effluent 165 from the CO₂ removal unit 160.

The H₂-containing gas maybe formed from a portion 227 of the H₂-containing product 225 and/or a portion 187b of the H₂-rich stream 187 from the cryogenic separation unit 180.

The flow rate of the portion 227 of the H₂-containing product 225 and/or the flow rate of the portion 187b of the H₂-rich stream 187 passed to the shift reactor 200 as part of the feed 199 to the shift reactor 200 during the secondary operating mode may be selected to maintain the temperature of the shift reactor effluent 116 and/or the temperature in the shift reactor 200 below a target maximum temperature. The target maximum temperature may be selected based on catalyst manufacturer specifications.

As shown in FIG. 1, a temperature sensor 205 may acquire the temperature of the shift reactor effluent 116 and provide a signal to a controller to adjust a valve to control the flow rate of H₂-containing gas. A temperature sensor (not shown) may acquire a temperature within the shift reactor 200 and provide a signal to a controller to adjust a valve to control the flow rate of H₂-containing gas.

Modeling of the shift reactor, for example using Aspen Plus® Software, may be used to determine a suitable flow rate of the portion 227 of the H₂-containing product 225 and/or the flow rate of the portion 187b of the H₂-rich stream 187 passed to the shift reactor 200 as part of the feed 199 to the shift reactor 200 during the secondary operating mode.

A process gas transfer line is provided for passing the H₂-containing gas to the inlet of the shift reactor 200. The H₂-containing gas may be heated in process gas heater 190 to provide a suitable temperature of the feed 199 to the shift reactor 200.

The process gas transfer line for providing the H₂-containing gas may provide fluid flow communication between the first outlet of the pressure swing adsorption unit 220 and the inlet of the shift reactor 200 to provide the portion 227 of the H₂-containing product 225 as the H₂-containing gas.

The process gas transfer line for providing the H₂-containing gas may provide fluid flow communication between the second outlet of the cryogenic separation unit 180 and the inlet of the shift reactor 200 to provide the portion 187b of the H₂-rich stream 187 as the H₂-containing gas.

In addition to the problem of overheating the shift catalyst in the shift reactor 200, care must be taken to avoid over-reduction of the shift catalyst in case the shift catalyst is an iron-based shift catalyst.

Over-reduction of the shift catalyst during the secondary operating mode can be avoided by introducing additional steam 209 with the feed 199 to the shift reactor 200. The addition or reduction of steam 209 and/or temperature of the steam 209 may also help with controlling the temperature of the shift catalyst in the shift reactor 200.

The additional steam 209 may be provided to the inlet of the shift reactor 200 by a process gas transfer line. The additional steam 209 may be produced in the heat transfer network of heat exchangers 210.

The propensity for shift catalyst over-reduction can be determined from a reduction factor (R) as is known in the art, for example as described in Smith R J et al., "A Review of the Water Gas Shift Reaction Kinetics," Int. J. of Chem. Reactor Engg., Vol. 8, The Berkeley Electronic Press, 2010. Furthermore, manufacturers of iron-based shift catalyst typically provide information about conditions necessary to avoid over-reduction of their iron-based shift catalyst.

The reduction factor generally considers the CO concentration, CO₂ concentration, H₂O concentration, and H₂ concentration.

The flow rate of the additional steam 209 passed as part of the feed 199 to the shift reactor 200 containing iron-based shift catalyst during the secondary operating mode may be selected to prevent over-reduction of the iron-based shift catalyst. The flow rate of additional steam 209 may be controlled as a function of the flow rate of the portion 189 of the CO-containing product 185.

The flow rate and/or temperature of the additional steam 209 passed as part of the feed 199 to the shift reactor 200 during the secondary operating mode may be controlled to maintain a temperature of the shift reactor effluent 116 leaving the shift reactor 200 below a target maximum temperature.

The flow rate and/or temperature of the additional steam 209 passed as part of the feed 199 to the shift reactor 200 during the secondary operating mode may be controlled to maintain a temperature in the shift reactor 200 below a target maximum temperature.

As the need for portion 186 of the CO-containing product 185 passed to storage, a customer, and/or a downstream process is decreased, the flow rate of divided portion 115b of the crude synthesis gas 115 is decreased and operation of the cryogenic separation unit 180 adjusted to accommodate the lower flow rates. Operation of cryogenic separation units at turndown conditions are known by those skilled in the art.

Since the flow rate of CO to the shift reactor 200 is increased during the secondary operating mode, additional H₂ will be formed and therefore additional H₂-containing product 225 will be produced from the pressure swing adsorption unit 220.

As a result, the production rate of the production unit 100 can be decreased and still produce the same amount of portion 226 of the H₂-containing product 225 passed to storage, a customer, and/or a downstream process during the secondary operating mode as during the primary operating mode.

Using the portion 189 of the CO-containing product 185 for the production of H₂ in the shift reactor 200 instead of using the CO for fuel or flaring improves the overall efficiency of the process during the secondary operating mode.

### Examples

The process was simulated using AspenPlus® simulation software. The production unit 100 was a catalytic steam-hydrocarbon reformer like shown in FIG. 2.

### Example 1

In example 1, the CO production train produces 35% of its design capacity for CO (i.e. a turndown case). Turn down to 35% corresponds to a typical minimum turndown capable for the CO production train.

Pressure swing adsorption tail gas is passed back to the catalytic steam-hydrocarbon reformer as fuel.

A portion (stream 183) of the CO that is produced is returned to the reformer as fuel. Another portion of the CO that is produced, stream 186, is flared. While some CO can be recycled back to the catalytic steam-hydrocarbon reformer as fuel, CO is a low heating value fuel, and there are limitations on the amount used as reformer fuel due to trim fuel constraints.

Table 1 provides a heat and material balance for the main process streams for example 1.

In this case the natural gas consumed for feed and (trim) fuel to the catalytic steam-hydrocarbon reformer is 585.8 GJ/h (HHV) to produce 1525.6 kmol/h H₂. The resulting gross efficiency 384.0 MJ/kmol H₂.

### Example 2

In example 2, the CO production train produces the same amount of CO as in example 1, (35% of the design capacity for the CO production train). The CO that is produced is passed to the shift reactor inlet as stream 189.

Pressure swing adsorption tail gas is passed back to the catalytic steam-hydrocarbon reformer as fuel.

Table 2 provides a heat and material balance for the main process streams for example 2.

In this case the natural gas consumed for feed and (trim) fuel to the catalytic steam-hydrocarbon reformer is 523.2 GJ/h (HHV) to produce 1388 kmol/h H₂. The resulting gross efficiency 376.9 MJ/kmol H₂.

**Table 1**

| | | | | | | |
|---|---|---|---|---|---|---|
| Stream # | 115a | 199 | 116 | 226 | 183 | 186 |
| T(°C) | 355 | 355 | 419 | 38 | 41 | 41 |
| P (MPa) | 3.25 | 3.25 | 3.20 | 4.5 | 1.7 | 1.70 |
| Flow (kmol/h) | 2060 | 2060 | 2060 | 1525.6 | 39.2 | 74.7 |

| Mole fractions | | | | | | |
|---|---|---|---|---|---|---|
| H₂ | 0.484 | 0.484 | 0.546 | 1.0 | - | - |
| CH₄ | 0.042 | 0.042 | 0.042 | - | - | - |
| N₂ | 0.001 | 0.001 | 0.001 | - | 0.006 | 0.006 |
| CO₂ | 0.052 | 0.052 | 0.114 | - | - | - |
| CO | 0.094 | 0.093 | 0.031 | - | 0.994 | 0.994 |
| H₂O | 0.327 | 0.327 | 0.265 | - | - | - |

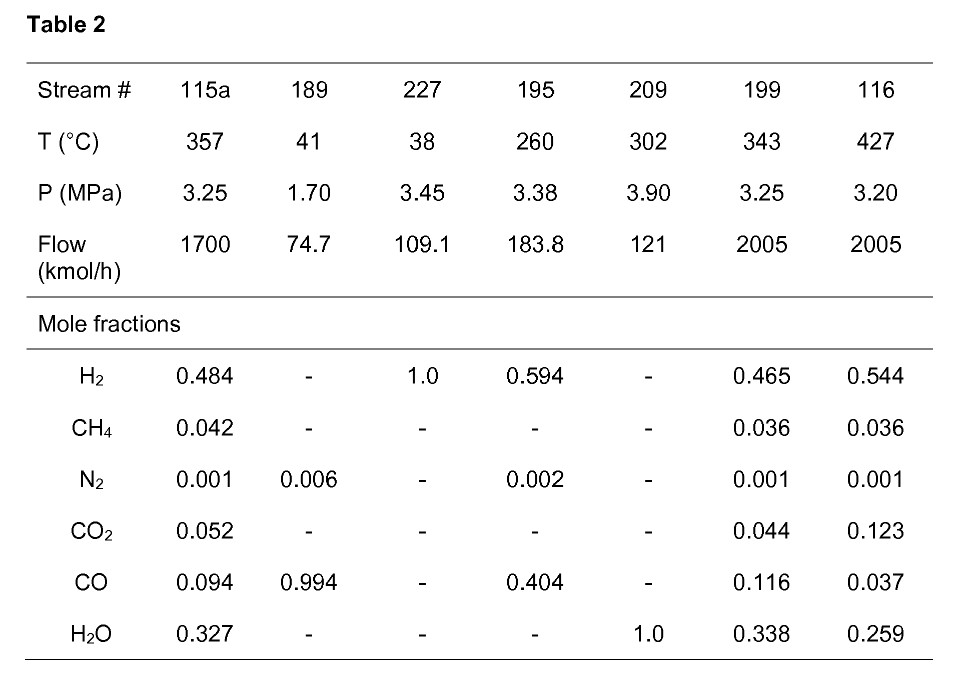

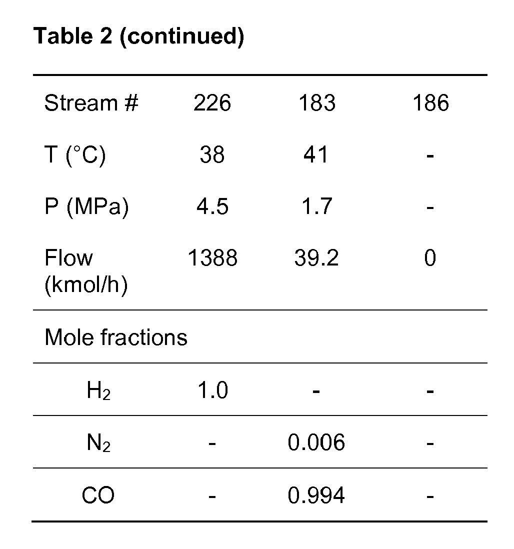

## Claims

1. A process for producing a H₂-containing product (225) and a CO-containing product (185) with CO-containing product turndown capability, the process comprises a primary operating mode and a secondary operating mode;
wherein during the primary operating mode and during the secondary operating mode:
a crude synthesis gas (115) is produced in a production unit (100), and the crude synthesis gas (115) is withdrawn from the production unit (100);
the crude synthesis gas (115) is divided into a first divided portion (115a) and a second divided portion (115b);
the first divided portion (115a) is passed to a shift reactor (200) as at least part of the feed to the shift reactor (200), reacted in the shift reactor to form a shift reactor effluent (116), and the shift reactor effluent (116) is withdrawn from the shift reactor (200);
a pressure swing adsorption unit feed comprising the shift reactor effluent (116) is separated in a pressure swing adsorption unit (220) to form the H₂-containing product (225) and a pressure swing adsorption unit by-product gas (221);
concurrent with passing the first divided portion (115a) as feed to the shift reactor (200), the second divided portion (115b) of the crude synthesis gas (115) is passed to a CO₂ removal unit (160), CO₂ is separated from the second divided portion (115b) in the CO₂ removal unit (160) to form a CO₂-depleted crude synthesis gas (161) and a CO₂-containing effluent (165);
a cryogenic separation unit feed comprising at least a portion of the CO₂-depleted crude synthesis gas (161) is separated in a cryogenic separation unit (180) to form at least the CO-containing product (185), a H₂-rich stream (187), and a cryogenic separation unit by-product (181); and
at least a portion (187a) of the H₂-rich stream (187) is passed to the pressure swing adsorption unit as part of the pressure swing adsorption unit feed; and
wherein during the secondary operating mode:
a portion (189) or all of the CO-containing product (185) is passed to the shift reactor (200) as part of the feed to the shift reactor (200).

2. The process as claimed in claim 1 wherein a H₂-containing gas is introduced into the shift reactor (200) as part of the feed to the shift reactor (200) during the secondary operating mode.

3. The process as claimed in claim 2 wherein the H₂-containing gas is at least one of a portion (227) of the H₂-containing product (225) or a portion (187b) of the H₂-rich stream (187).

4. The process as claimed in claim 2 or claim 3 wherein the flow rate of the H₂-containing gas passed to the shift reactor (200) as part of the feed to the shift reactor (200) during the secondary operating mode is selected to maintain a temperature in the shift reactor below a target maximum temperature and/or to maintain a temperature of the shift reactor effluent (116) leaving the shift reactor (200) below a target maximum temperature.

5. The process as claimed in any one of claims 1 to 4 wherein additional steam (209) is passed to the shift reactor (200) as part of the feed to the shift reactor (200) during the secondary operating mode.

6. The process as claimed in claim 5 wherein the shift reactor contains an iron-based shift catalyst, and wherein the flow rate of the additional steam (209) passed to the shift reactor (200) as part of the feed to the shift reactor (200) during the secondary operating mode is selected to prevent over-reduction of the iron-based shift catalyst.

7. The process as claimed in any one of the preceding claims wherein a portion (183) of the CO-containing product (185) is passed to the production unit (100) as a feed to the production unit (100) during the secondary operating mode.

8. The process as claimed in any one of the preceding claims further comprising: separating the CO₂-depleted crude synthesis gas (161) from the CO₂-removal unit (160) in a temperature swing adsorption unit (170) to form the cryogenic separation unit feed (171) and a temperature swing adsorption unit by-product gas (175).

9. An apparatus for producing a H₂-containing product (225) and a CO-containing product (185) with CO-containing product turndown capability, the apparatus comprising
a production unit (100) for producing a crude synthesis gas (115), the production unit (100) having an inlet and an outlet;
a shift reactor (200) having an inlet and an outlet, the inlet of the shift reactor (200) in fluid flow communication with the outlet of the production unit (100);
a pressure swing adsorption unit (220) having an inlet, a first outlet, and a second outlet, the inlet of the pressure swing adsorption unit (220) in fluid flow communication with the outlet of the shift reactor (200);
a CO₂ removal unit (160) having an inlet, a first outlet and a second outlet, the inlet of the CO₂ removal unit (160) in fluid flow communication with the outlet of the production unit (100);
a cryogenic separation unit (180) having an inlet, a first outlet, a second outlet, and a third outlet, the inlet in fluid flow communication with the first outlet of the CO₂ removal unit (160);
a first process gas transfer line, wherein the inlet of the shift reactor (200) is in fluid flow communication with the first outlet of the cryogenic separation unit (180) via the first process gas transfer line; and
a second process gas transfer line, wherein the inlet of the pressure swing adsorption unit (220) is in fluid flow communication with the second outlet of the cryogenic separation unit (180) via the second process gas transfer line.

10. The apparatus as claimed in claim 9 further comprising
a process gas transfer line for passing a H₂-containing gas to the inlet of the shift reactor (200).

11. The apparatus as claimed in claim 10 wherein the process gas transfer line for passing a H₂-containing gas provides fluid flow communication between the first outlet of the pressure swing adsorption unit (220) and the inlet of the shift reactor (200) and/or provides fluid flow communication between the second outlet of the cryogenic separation unit (180) and the inlet of the shift reactor (200).

12. The apparatus as claimed in any one of the preceding claims 9 to 11 further comprising
a process gas transfer line for passing additional steam (209) to the inlet of the shift reactor (200).

13. The apparatus as claimed in any one of the preceding claims 9 to 12
wherein the outlet of the production unit is for discharging a crude synthesis gas (115) formed in the production unit;
wherein the inlet of the shift reactor (200) is disposed to receive a first divided portion of the crude synthesis gas (115) discharged from the outlet of the production unit;
wherein the inlet of the pressure swing adsorption unit (220) is disposed to receive at least a portion of a shift reactor effluent from the outlet of the shift reactor (200), the first outlet of the pressure swing adsorption unit (220) is for discharging the H₂-containing product (225), and the second outlet of the pressure swing adsorption unit (220) is for discharging a pressure swing adsorption unit by-product gas (221);
wherein the inlet of the CO₂ removal unit (160) is disposed to receive a second divided portion of the crude synthesis gas withdrawn from the outlet of the production unit, the first outlet of the CO₂ removal unit (160) is for discharging a CO₂-depleted crude synthesis gas (161), and the second outlet of the CO₂ removal unit is for discharging a CO₂-containing effluent (165);
wherein the inlet of the cryogenic separation unit (180) is disposed to receive at least a portion of the CO₂-depleted crude synthesis gas (161) from the outlet of the CO₂-removal unit (160), the first outlet of the cryogenic separation unit (180) is for discharging a CO-containing product (185), and the second outlet of the cryogenic separation unit (180) is for discharging a H₂-rich stream (187);
wherein the first process gas transfer line is for passing a portion (189) or all of the CO-containing product (185) from the first outlet of the cryogenic separation unit (180) to the inlet of the shift reactor (200);
wherein the second process gas transfer line is for passing at least a portion (187a) of the H₂-rich stream (187) from the second outlet of the cryogenic separation unit (180) to the inlet of the pressure swing adsorption unit (220).

14. The apparatus as claimed in any one of the preceding claims 9 to 13 further comprising a temperature swing adsorption unit (170) having an inlet, a first outlet, and a second outlet, the inlet of the temperature swing adsorption unit (170) in fluid flow communication with the outlet of the CO₂ removal unit (160), and the inlet of the cryogenic separation unit (180) in fluid flow communication with the first outlet of the temperature swing adsorption unit (170).

## Patentansprüche

1. Verfahren zum Herstellen eines wasserstoffhaltigen Produkts (225) und eines CO₂-enthaltenden Produkts (185) mit einer Teillastfähigkeit für das CO₂-enthaltenden Produkt (185), wobei das Verfahren einen primären Prozessmodus und einen sekundären Prozessmodus umfasst;
wobei während des primären Prozessmodus und während des sekundären Prozessmodus:
ein synthetisches Rohgas (115) in einer Produktionsanlage (100) hergestellt und das synthetische Rohgas aus der Produktionsanlage (100) ausgeschieden wird;
das synthetische Rohgas (115) in eine erste abgeteilte Menge (115a) und eine zweite abgeteilte Menge (115b) geteilt wird;
die erste abgeteilte Menge (115a) wird zu einem Shiftreaktor (200) als wenigstens ein Teil einer Beschickung des Shiftreaktors (200) geleitet, in dem Shiftreaktor reagiert, um einen Shiftreaktorausfluss (116) zu bilden, und der Shiftreaktorausfluss (116) wird aus dem Shiftreaktor (200) ausgeschieden;
eine Druckwechseladsorptionsanlagenbeschickung, die den Shiftreaktorausfluss (116) umfasst, wird in der Druckwechseladsorptionsanlage (220) getrennt, um das wasserstoffhaltige Produkt (225) und ein Druckwechseladsorptionsanlagennebenproduktgas (221) zu bilden;
gleichzeitig mit dem Leiten der ersten abgeteilten Menge (115a) als Beschickung für den Shiftreaktor (200) wird die zweite abgeteilte Menge (115b) des synthetischen Rohgases (115) wird zu einer CO₂-Entfernungsanlage (160) geleitet, CO₂ wird von der zweiten abgeteilten Mange (115b) in der CO₂-Entfernungsanlage (160) getrennt, um ein CO₂-abgereichertes synthetisches Rohgas (161) und einen CO₂ enthaltenden Ausfluss (165) zu bilden;
eine kryogene Trennungsanlagenbeschickung, die wenigstens eine Teilmenge des CO₂-abgereichertes synthetisches Rohgases (161) umfasst, wird in einer kryogenen Separationsanlage (180) getrennt, um wenigstens das CO₂-enthaltenden Produkt (185), einen wasserstoffreichen Strom (187) und ein kryogenes Separationsnebenprodukt (181) zu bilden; und
wenigstens einen Teil (187a) des wasserstoffreichen Stroms (187) wird zu der Druckwechseladsorptionsanlage als Teil der Druckwechseladsorptionsanlagenbeschickung geleitet; und
wobei während des sekundären Prozessmodus:
eine Teilmenge (189) oder das gesamte das CO₂-enthaltenden Produkt (185) zu dem Shiftreaktor (200) als Teil der Beschickung für den Shiftreaktor (200) geleitet wird.

2. Verfahren nach Anspruch 1, wobei das wasserstoffhaltige Gas als Teil der Beschickung für den Shiftreaktor (200) in den Shiftreaktor (200) während des sekundären Prozessmodus eingeführt wird.

3. Verfahren nach Anspruch 2, wobei das wasserstoffhaltige Gas wenigstens eines aus einer Teilmenge (227) des wasserstoffhaltigen Produkts (225) oder einer Teilmenge (187b) des wasserstoffreichen Stroms (187) ist.

4. Verfahren nach einem der Ansprüche 2 oder 3, wobei der Volumenstrom des wasserstoffhaltigen Gases, das während des sekundären Prozessmodus zu dem Shiftreaktor (200) als Teil der Beschickung für den Shiftreaktor (200) geleitet wird, so gewählt ist, dass eine Temperatur in dem Shiftreaktor unter einer maximalen Zieltemperatur gehalten wird und/oder eine Temperatur des Shiftreaktorausflusses (116), der den Shiftreaktor (200) verlässt, unter einer maximalen Zieltemperatur gehalten wird.

5. Verfahren nach einem der Ansprüche 1 bis 5, wobei während des sekundären Prozessmodus zusätzlich Dampf (209) zu dem Shiftreaktor (200) als Teil der Beschickung für den Shiftreaktor (200) geleitet wird.

6. Verfahren nach Anspruch 5, wobei der Shiftreaktor einen eisenbasierten Shiftkatalysator umfasst, und wobei der Volumenstrom des zusätzlichen Dampfs (209), der während des sekundären Prozessmodus zu dem Shiftreaktor (200) als Teil der Beschickung für den Shiftreaktor (220) geleitet wird, so ausgewählt wird, um einer Überreduktion des eisenbasierten Shiftkatalysators vorzubeugen.

7. Verfahren nach einem der vorhergehenden Ansprüche, wobei während des sekundären Prozessmodus eine Teilmenge (183) des CO₂-enthaltenden Produkts (185) zu der Produktionsanlage (100) als Beschickung der Produktionsanlage (100) geleitet wird.

8. Verfahren nach einem der vorhergehenden Ansprüche, ferner umfassend: Trennen des CO₂-abgereichertes synthetisches Rohgases (161) aus der CO₂-Entfernungsanlage (160) in einer Temperaturwechseladsorptionsanlage (170), um die kryogene Separationsanlagenbeschickung (171) und ein Temperaturwechseladsorptionsanlagenebenproduktgas (175) zu bilden.

9. Vorrichtung zur Herstellung eines wasserstoffhaltigen Produkts (225) und eines CO₂-enthaltenden Produktes (185) mit Teillastfähigkeit für das CO₂-enthaltenden Produkt (185), wobei die Vorrichtung umfasst:
eine Produktionsanlage (100) zur Herstellung eines synthetischen Rohgases (115), wobei die Produktionsanlage (100) einen Einlass und einen Auslass hat;
einen Shiftreaktor (200) mit einem Einlass und einem Auslass, wobei der Einlass des Shiftreaktors (200) in Fluidströmungsverbindung mit dem Auslass der Produktionsanlage (100) steht;
einen Druckwechseladsorptionsanlage (220) mit einem Einlass, einem ersten Auslass und einem zweiten Auslass, wobei der Einlass der Druckwechseladsorptionsanlage (220) in Fluidströmungsverbindung mit dem Auslass des Shiftreaktors (200) steht;
eine CO₂-Entfernungsanlage (160) mit einem Einlass , einem ersten Auslass und einem zweiten Auslass, wobei der Einlass der CO₂-Entfernungsanlage (160) in Fluidströmungsverbindung mit dem Auslass der Produktionsanlage (100) steht;
eine kryogene Separationsanlage (180) mit einem Einlass, einem ersten Auslass, einem zweiten Auslass und einem dritten Auslass, wobei der Einlass in Fluidströmungsverbindung mit dem ersten Auslass der CO₂-Entfernungsanlage (160) steht;
einer ersten Prozessgastransferleitung, wobei der Einlass des Shiftreaktors über die erste Prozessgastransferleitung in Fluidströmungsverbindung mit dem ersten Auslass der kryogenen Separationsanlage (180) steht;
eine zweite Prozessgastransferleitung, wobei der Einlass der Druckwechseladsorptionsanlage (220) über die zweite Prozessgastransferleitung in Fluidströmungsverbindung mit dem zweiten Auslass der kryogenen Separationsanlage (180) steht.

10. Vorrichtung nach Anspruch 9, ferner umfassend:
eine Prozessgastransferleitung, um das wasserstoffhaltige Gas zu dem Einlass der Shiftreaktors (200) zu leiten.

11. Vorrichtung nach Anspruch 10, wobei die Prozessgastransferleitung zum Leiten des wasserstoffhaltigen Gases eine Fluidströmungsverbindung zwischen dem ersten Auslass der Druckwechseladsorptionsanlage (220) und dem Einlass des Shiftreaktors (200) und/oder eine Fluidströmungsverbindung zwischen dem zweiten Auslass der kryogenen Separationsanlage (180) und dem Einlass des Shiftreaktors (200) herstellt.

12. Vorrichtung nach einem der vorhergehenden Ansprüche 9 bis 11, ferner umfassend:
eine Prozessgastransferleitung um zusätzlich Dampf (209) zu dem Einlass des Shiftreaktors (200) zu leiten.

13. Vorrichtung nach einem der vorhergehenden Ansprüche 9 bis 12
wobei der Auslass der Produktionsanlage der Ausgabe eines in der Produktionsanlage gebildeten synthetischen Rohgases (115) dient;
wobei der Einlass des Shiftreaktors (200) dazu dient, eine erste abgeteilte Menge des synthetischen Rohgases (115) das vom Auslass der Produktionsanlage ausgegeben wird, aufzunehmen;
wobei der Einlass der Druckwechseladsorptionsanlage (220) dazu dient, wenigstens einen Teil eines Shiftreaktorausflusses aus dem Auslass des Shiftreaktors (200) aufzunehmen, der erste Auslass der Druckwechseladsorptionsanlage (220) zum Ablassen des wasserstoffhaltigen Produkts (225), und der zweite Auslass der Druckwechseladsorptionsanlage (200) zur Abgabe eines Druckwechseladsorptionsanlagenebenproduktgas (221) dient;
wobei der Einlass der CO₂-Entfernungsanlage (160) dazu dient, eine zweite abgeteilte Menge des synthetischen Rohgases, das durch den Auslass der Produktionseinheit abgegeben wird, aufzunehmen, der erste Auslass der CO₂-Entfernungsanlage (160) zur Abgabe eines CO₂-abgereichertes synthetisches Rohgases (161), und der zweite Auslass der CO₂-Entfernungsanlage zur Abgabe eines CO₂ enthaltenden Ausflusses (165) dient;
wobei der Einlass der kryogenen Separationsanlage (180) dazu dient, wenigstens eine Teilmenge des CO₂-abgereichertes synthetisches Rohgases (161) von dem Auslass der CO₂-Entfernungsanlage (160) aufzunehmen, der erste Auslass der kryogenen Separationsanlage (180) zur Abgabe eines CO₂ enthaltenden Produkts (185), und der zweite Auslass der kryogenen Separationsanlage (180) zur Abgabe eines wasserstoffreichen Stroms (187) dient;
wobei die erste Prozessgastransferleitung dazu dient, eine Teilmenge (189) des oder das gesamte CO₂ enthaltenden Produkt (185) von dem ersten Auslass der kryogenen Separationsanlage (180) zu dem Einlass des Shiftreaktors (200) zu leiten;
wobei die zweite Prozessgastransferleitung dazu dient, wenigstens eine Teilmenge (187a) des wasserstromreichen Stroms (187) von dem zweiten Auslass der kryogenen Separationsanlage (180) zu dem Einlass der Druckwechseladsorptionsanlage (220) zu leiten.

14. Vorrichtung nach einem der Ansprüche 9 bis 13, ferner umfassend eine Temperaturwechseladsorptionsanlage (170) mit einem Einlass, einem ersten Auslass und einem zweiten Auslass, wobei der Einlass der Temperaturwechseladsorptionsanlage (170) in Fluidströmungsverbindung mit dem Auslass der CO₂-Entfernungsanlage (160), und der Einlass der kryogenen Separationsanlage (180) in Fluidströmungsverbindung mit dem ersten Auslass der Temperaturwechseladsorptionsanlage (170) steht.

## Revendications

1. Un procédé de production d'un produit contenant du H2 (225) et d'un produit contenant du CO (185) avec une capacité de débit ralenti du produit contenant du CO, le procédé comprenant un mode opératoire primaire et un mode opératoire secondaire ; dans lequel, pendant le mode opératoire primaire et le mode opératoire secondaire :
un gaz de synthèse brut (115) est produit dans une unité de production (100) et le gaz de synthèse brut (115) est extrait de l'unité de production (100) ;
le gaz de synthèse brut (115) est divisé en une première partie divisée (115a) et une deuxième partie divisée (115b) ;
la première partie divisée (115a) est amenée à un réacteur de transformation (200) comme au moins une partie de la charge vers le réacteur de transformation (200), mise en réaction dans le réacteur de transformation pour former un effluent du réacteur de transformation (116), et l'effluent du réacteur de transformation (116) est extrait du réacteur de transformation (200) ; une charge de l'unité d'adsorption modulée en pression comprenant l'effluent du réacteur de transformation (116) est séparée dans l'unité d'adsorption modulée en pression (220) pour former le produit contenant du H2 (225) et un gaz sous-produit de l'unité d'adsorption modulée en pression (221) ;
en même temps que le passage de la première partie divisée (115a) comme charge vers le réacteur de transformation (200), la deuxième partie divisée (115b) du gaz de synthèse brut (115) est amenée vers une unité d'élimination de CO2 (160), le CO2 étant séparé de la deuxième partie divisée (115b) dans l'unité d'élimination de CO2 (160) pour former un gaz de synthèse brut appauvri en CO2 (161) et un effluent contenant du CO2 (165) ;
une charge de l'unité de séparation cryogénique comprenant au moins une partie du gaz de synthèse brut appauvri en CO2 (161) est séparée dans l'unité de séparation cryogénique (180) pour former au moins le produit contenant du CO (185), un flux riche en H2 (187) et un sous-produit de l'unité de séparation cryogénique (181) ; et
au moins une partie (187a) du flux riche en H2 (187) est amenée à l'unité d'adsorption modulée en pression comme partie de la charge de l'unité d'adsorption modulée en pression ; et dans lequel, pendant le deuxième mode opératoire :
une partie (189) ou la totalité du produit contenant du CO (185) est amenée au réacteur de transformation (200) comme une partie de la charge vers le réacteur de transformation (200).

2. Le procédé selon la revendication 1, dans lequel un gaz contenant du H2 est introduit dans le réacteur de transformation (200) comme partie de la charge vers le réacteur de transformation (200) pendant le mode opératoire secondaire.

3. Le procédé selon la revendication 2, dans lequel le gaz contenant du H2 est au moins une partie (227) du produit contenant du H2 (225) ou une partie (187b) du flux riche en H2 (187).

4. Le procédé selon l'une des revendications 2 ou 3, dans lequel le débit du gaz contenant du H2 amené au réacteur de transformation (200) comme une partie de la charge vers le réacteur de transformation (200) pendant le mode opératoire secondaire est choisi pour maintenir une température dans le réacteur de transformation inférieure à une température maximale cible et/ou pour maintenir une température de l'effluent du réacteur de transformation (116) quittant le réacteur de transformation (200) inférieure à une température maximale cible.

5. Le procédé selon l'une quelconque des revendications 1 à 4, dans lequel de la vapeur supplémentaire (209) est amenée au réacteur de transformation (200) comme une partie de la charge vers le réacteur de transformation (200) pendant le mode opératoire secondaire.

6. Le procédé selon la revendication 5, dans lequel le réacteur de transformation contient un catalyseur de transformation à base de fer et dans lequel le débit de la vapeur supplémentaire (209) amenée au réacteur de transformation (200) comme une partie de la charge vers le réacteur de transformation (200) pendant le mode opératoire secondaire est choisi pour empêcher une réduction excessive du catalyseur de transformation à base de fer.

7. Le procédé selon l'une quelconque des revendications précédentes, dans lequel une partie (183) du produit contenant du CO (185) est amenée à l'unité de production (100) comme une charge vers l'unité de production (100) pendant le mode opératoire secondaire.

8. Le procédé selon l'une quelconque des revendications précédentes comprenant par ailleurs :
la séparation du gaz de synthèse brut appauvri en CO2 (161) à partir de l'unité d'élimination du CO2 (160) dans une unité d'adsorption modulée en température (170) pour former la charge de l'unité de séparation cryogénique (171) et un gaz de sous-produit de l'unité d'adsorption modulée en température (175).

9. Un appareil de production d'un produit contenant du H2 (225) et d'un produit contenant du CO (185) avec une capacité de réglage du produit contenant du CO, l'appareil comprenant :
une unité de production (100) pour produire un gaz de synthèse brut (115), l'unité de production (100) ayant une entrée et une sortie ;
un réacteur de transformation (200) possédant une entrée et une sortie, l'entrée du réacteur de transformation (200) étant en communication fluidique avec la sortie de l'unité de production (100) ;
une unité d'adsorption modulée en pression (220) possédant une entrée, une première sortie et une deuxième sortie, l'entrée de l'unité d'adsorption modulée en pression (220) étant en communication fluidique avec la sortie du réacteur de transformation (200) ;
une unité d'élimination de CO2 (160) possédant une entrée, une première sortie et une deuxième sortie, l'entrée de l'unité d'élimination de CO2 (160) étant en communication fluidique avec la sortie de l'unité de production (100) ;
une unité de séparation cryogénique (180) possédant une entrée, une première sortie, une deuxième sortie et une troisième sortie, l'entrée étant en communication fluidique avec la première sortie de l'unité d'élimination de CO2 (160) ;
une première ligne de transfert de gaz de processus, dans laquelle l'entrée du réacteur de transformation (200) se trouve en communication fluidique avec la première sortie de l'unité de séparation cryogénique (180) par l'intermédiaire de la première ligne de transfert de gaz de processus ; et
une deuxième ligne de transfert de gaz de processus, dans laquelle l'entrée de l'unité d'adsorption modulée en pression (220) se trouve en communication fluidique avec la deuxième sortie de l'unité de séparation cryogénique (180) par l'intermédiaire de la deuxième ligne de transfert de gaz de processus.

10. L'appareil selon la revendication 9, comprenant par ailleurs :
une ligne de transfert de gaz de processus pour amener un gaz contenant du H2 vers l'entrée du réacteur de transformation (200).

11. L'appareil selon la revendication 10, dans lequel la ligne de transfert de gaz de processus pour le passage d'un gaz contenant du H2 assure une communication fluidique entre la première sortie de l'unité d'adsorption modulée en pression (220) et l'entrée du réacteur de transformation (200) et/ou assure une communication fluidique entre la deuxième sortie de l'unité de séparation cryogénique (180) et l'entrée du réacteur de transformation (200).

12. L'appareil selon l'une quelconque des revendications 9 à 11 précédentes, comprenant par ailleurs :
une ligne de transfert de gaz de processus pour amener de la vapeur supplémentaire (209) vers l'entrée du réacteur de transformation (200).

13. L'appareil selon l'une quelconque des revendications 9 à 12 précédentes,
dans lequel la sortie de l'unité de production est destinée à évacuer un gaz de synthèse brut (115) formé dans l'unité de production;
dans lequel l'entrée du réacteur de transformation (200) est disposée pour recevoir un première partie divisée du gaz de synthèse brut (115) évacué de la sortie de l'unité de production ;
dans lequel l'entrée de l'unité d'adsorption modulée en pression (220) est disposée pour recevoir au moins une partie d'un effluent du réacteur de transformation provenant de la sortie du réacteur de transformation (200), la première sortie de l'unité d'adsorption modulée en pression (220) étant destinée à décharger le produit contenant du H2 (225) et la deuxième sortie de l'unité d'adsorption modulée en pression (220) étant destinée à décharger un gaz sous-produit de l'unité d'adsorption modulée en pression (221) ;
dans lequel l'entrée de l'unité d'élimination de CO2 (160) est disposée pour recevoir une deuxième partie divisée du gaz de synthèse brut extrait de la sortie de l'unité de production, la première sortie de l'unité d'élimination de CO2 (160) étant destinée à évacuer un gaz de synthèse brut appauvri en CO2 (161) et la deuxième sortie de l'unité d'élimination de CO2 étant destinée à décharger un effluent contenant du CO2 (165) ;
dans lequel l'entrée de l'unité de séparation cryogénique (180) est disposée pour recevoir au moins une partie du gaz de synthèse brut appauvri en CO2 (161) de la sortie de l'unité d'élimination de CO2 (160), la première sortie de l'unité de séparation cryogénique (180) étant destinée à évacuer un produit contenant du CO (185) et la deuxième sortie de l'unité de séparation cryogénique (180) étant destinée à évacuer un flux riche en H2 (187) ;
dans lequel la première ligne de transfert de gaz de processus est destinée à amener une partie (189) ou la totalité du produit contenant du CO (185) de la première sortie de l'unité de séparation cryogénique (180) vers l'entrée du réacteur de transformation (200) ;
dans lequel la deuxième ligne de transfert de gaz de processus est destinée à amener au moins une partie (187a) du flux riche en H2 (187) de la deuxième sortie de l'unité de séparation cryogénique (180) vers l'entrée de l'unité d'adsorption modulée en pression (220).

14. L'appareil selon l'une quelconque des revendications 9 à 13 précédentes, comprenant par ailleurs une unité d'adsorption modulée en température (170) possédant une entrée, une première sortie et une deuxième sortie, l'entrée de l'unité d'adsorption modulée en température (170) étant en communication fluidique avec la sortie de l'unité d'élimination de CO2 (160), et l'entrée de l'unité de séparation cryogénique (180) étant en communication fluidique avec la première sortie de l'unité d'adsorption modulée en température (170).
